# FASCICULE DE BREVET EUROPEEN

(11) **EP 1 680 257 B1**
(45) Date de publication et mention de la délivrance du brevet: **27.07.2016**
(21) Numéro de dépôt: 04818445.1
(22) Date de dépôt: 13.10.2004
(51) Int. Cl.: B23P 19/04, B21F 33/04, B65D 59/04, B65D 85/02

(54) **DISPOSITIF DE MANIPULATION D'UN RESSORT HÉLICOÏDAL, INSTALLATION DE MANIPULATION D'UN TEL RESSORT ET PROCÉDÉ POUR MANIPULER UN TEL RESSORT**
HANDHABUNGSVORRICHTUNG FÜR SCHRAUBENFEDER, SOWIE HANDHABUNGSANLAGE UND HANDHABUNGSVERFAHREN FÜR SOLCHE FEDER
HANDLING DEVICE FOR A HELICAL SPRING, HANDLING INSTALLATION FOR SUCH A SPRING AND METHOD FOR HANDLING SUCH A SPRING

(30) Priorité: 29.10.2003 FR 0312643
(43) Date de publication de la demande: 19.07.2006
(73) Titulaire: Tech Group Europe Limited, Dublin 2 (IE)
(72) Inventeur: CHEVALLIER, Stéphane, F-77178 Saint Pathus (FR)
(74) Mandataire: Intès, Didier Gérard André
(86) Numéro de dépôt international: PCT/FR2004/002598
(87) Numéro de publication internationale: WO 2005/046930

(56) Documents cités:
- EP-A- 0 967 031
- WO-A-02/38304
- CH-A- 461 183
- GB-A- 2 283 552
- US-A- 3 514 843
- US-A- 4 653 185
- US-A- 5 822 837
- US-A- 5 845 384
- US-B1- 6 488 285
- DATABASE WPI Section PQ, Week 198934 Derwent Publications Ltd., London, GB; Class Q32, AN 1989-247019 XP002275399 -& SU 1 440 808 A (KOROLEV E D) 30 novembre 1988 (1988-11-30)

## Description

L'invention concerne un dispositif de manipulation d'un ressort hélicoïdal, une installation de manipulation d'un tel ressort et un procédé pour manipuler un tel ressort. Un ressort hélicoïdal est un objet ayant une forme allongée ayant tendance, lorsqu'il est disposé en vrac avec des ressorts similaires, à s'enchevêtrer avec eux.

Ainsi, lors de leur stockage, ces ressorts hélicoïdaux s'emmêlent, cette tendance étant encore accrue du fait que ces ressorts n'ont pas toujours de position de repos stable. Par exemple, un ressort hélicoïdal a tendance à tourner sur lui-même lorsqu'il est disposé sur un plan.

Lorsque l'on souhaite utiliser un ressort hélicoïdal, par exemple pour le monter dans un ensemble dans lequel il est destiné à être intégré, il faut d'abord le séparer des autres ressorts hélicoïdaux avec lesquels il s'est enchevêtré. Cette manipulation est fastidieuse et a un impact pénalisant sur les coûts de production de tels ensembles.

Le brevet US 545384 qui est consideré comme l'état de la technique le plus proche de l'objet des revendications 1 et 12 se rapporte à la solidarisation d'une douille déformable avec une tige cylindrique.

Le brevet US 3514843 divulgue un dispositif et un procédé pour donner une section triangulaire à une pièce cylindrique, en particulier une structure hélicoïdale servant à la propagation d'ondes électromagnétiques.

Le brevet CH 461183 divulgue un procédé pour solidariser une pièce de machine pleine, non fendue, à la surface cylindrique d'une autre pièce, la surface de la pièce de machine coopérant avec ladite surface cylindrique ayant une section non circulaire.

Le but de l'invention est de faciliter la manipulation de ressorts hélicoïdaux, en particulier en évitant qu'ils ne s'enchevêtrent entre eux lors de leur stockage préalable à cette manipulation.

Ce but est atteint par le dispositif selon la revendication 1.

Ce dispositif permet de faciliter la manipulation du ressort hélicoïdal qu'il contient, puisqu'il suffit à l'utilisateur de déformer la zone d'étranglement en appuyant sur la paroi extérieure du dispositif, pour que le dispositif puisse recevoir ou libérer le ressort hélicoïdal. Bien entendu, après avoir été libéré, ce ressort hélicoïdal peut être manipulé normalement.

La mise en place de ce ressort hélicoïdal dans le dispositif et son extraction, hors de ce dernier, sont des manoeuvres simples et rapides. Après leur fabrication, plusieurs ressorts hélicoïdaux peuvent être stockés ensemble en étant disposés chacun dans un dispositif selon l'invention, sans risquer de s'enchevêtrer lors de ce stockage. Ces différents ressorts hélicoïdaux peuvent être aisément extraits de ce stock en vue de leur manipulation ultérieure.

Avantageusement, dans sa configuration déformée, la zone d'étranglement est dans un état instable, de sorte que dès lors que la sollicitation provoquant la déformation cesse, la zone d'étranglement reprend son état stable.

Ainsi, un ressort hélicoïdal qui vient d'être introduit dans le corps du dispositif peut y être maintenu par un simple relâchement de cette sollicitation.

Préférentiellement, le corps a sensiblement une forme allongée et tubulaire.

Ainsi, sa forme est adaptée pour recevoir des objets cylindriques, comme le sont la plupart des ressorts hélicoïdaux.

La zone d'étranglement présente dans son état stable une dimension réduite dans une section transversale dudit corps, de sorte que la section interne du logement présente une variation destinée à maintenir le ressort hélicoïdal dans le dispositif en le plaquant au moins en partie contre une portion de paroi interne.

Dans sa configuration déformée, la zone d'étranglement présente une section transversale sensiblement circulaire.

L'invention concerne aussi une installation de manipulation pour un ressort hélicoïdal.

Cette installation se caractérise par le fait qu'elle comporte un dispositif de manipulation selon l'invention, des moyens de maintien de ce dispositif et des moyens de sollicitation aptes à solliciter ledit dispositif pour déformer ladite zone d'étranglement.

Ainsi, la manipulation de ressorts hélicoïdaux du type précédemment défini, peut être au moins en partie automatisée. L'utilisateur n'a pas à manipuler le dispositif pour déformer la zone d'étranglement.

L'installation peut être employée pour l'insertion et/ou l'extraction d'une pluralité de ressorts hélicoïdaux dans des dispositifs dès lors qu'elle comporte des moyens de chargement permettant l'introduction d'un ressort hélicoïdal dans un dispositif et/ou des moyens de déchargement de ressorts hélicoïdaux permettant l'extraction d'un ressort hélicoïdal hors du dispositif dans lequel ledit ressort hélicoïdal est logé.

L'invention concerne aussi un procédé pour manipuler un ressort hélicoïdal.

Ce procédé est défini selon la revendication 12.

Une simple déformation de la zone d'étranglement suffit ainsi à la mise en place d'un ressort hélicoïdal dans un dispositif qui permet une manipulation aisée dudit ressort hélicoïdal inséré.

De manière analogue, pour extraire la pièce hors du dispositif, on déforme préférentiellement la zone d'étranglement pour qu'elle adopte sa configuration déformée.

Dans sa configuration déformée, la zone d'étranglement est préférentiellement dans un état instable, de sorte que la zone d'étranglement retrouve son état stable dès qu'on cesse de la solliciter pour la déformer.

L'invention sera bien comprise et ses avantages apparaîtront mieux à la lecture de la description détaillée qui suit, d'un mode de réalisation de l'invention représenté à titre d'exemple non limitatif.

La description se réfère aux dessins annexés sur lesquels :
- la figure 1 représente une vue en perspective d'un dispositif selon l'invention,
- la figure 2 représente une coupe longitudinale du dispositif de la figure 1 dans son état stable selon un premier plan,
- la figure 3 représente une vue en coupe de la figure 2 selon la ligne III-III,
- la figure 4 représente une vue en coupe de la figure 2 selon la ligne IV-IV,
- la figure 5 représente une vue en coupe correspondant à une coupe de la figure 2 selon la ligne V-V, la zone d'étranglement étant dans sa configuration déformée, et
- la figure 6 représente de manière schématique une installation selon l'invention.

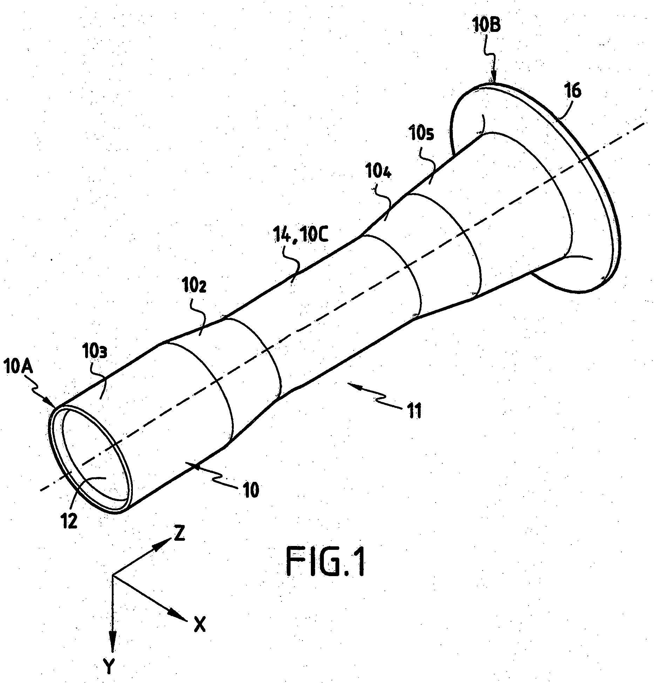

La figure 1 représente en perspective un dispositif 11 qui comporte un corps 10 dont la forme est sensiblement allongée et tubulaire. Ce corps 10, qui s'étend selon une direction longitudinale Z, est creux de manière à définir un logement intérieur 12 sensiblement allongé selon la direction Z. Le corps 10 présente deux extrémités respectives 10A et 10B qui sont ouvertes de sorte qu'un ressort hélicoïdal (non représenté sur la figure 1) peut être logé dans le logement 12 et peut y être introduit ou en être extrait par une de ces deux extrémités 10A et 10B.

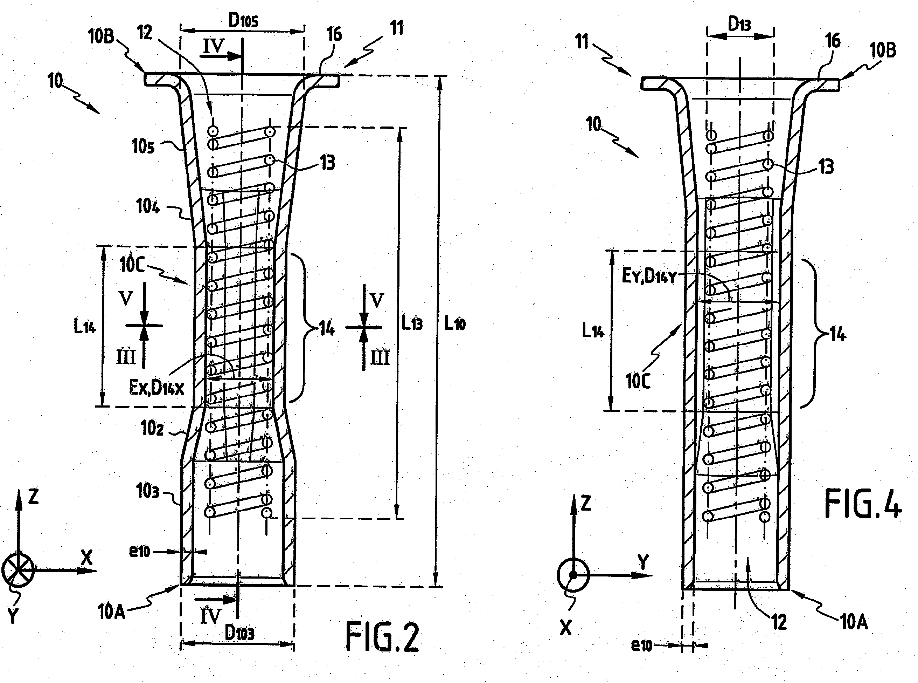

La figure 2 représente une coupe longitudinale du dispositif 11 dans son état stable selon un premier plan (X, Z). Dans cet état stable, le dispositif 11 est apte à retenir un ressort hélicoïdal 13 à l'intérieur du logement 12.

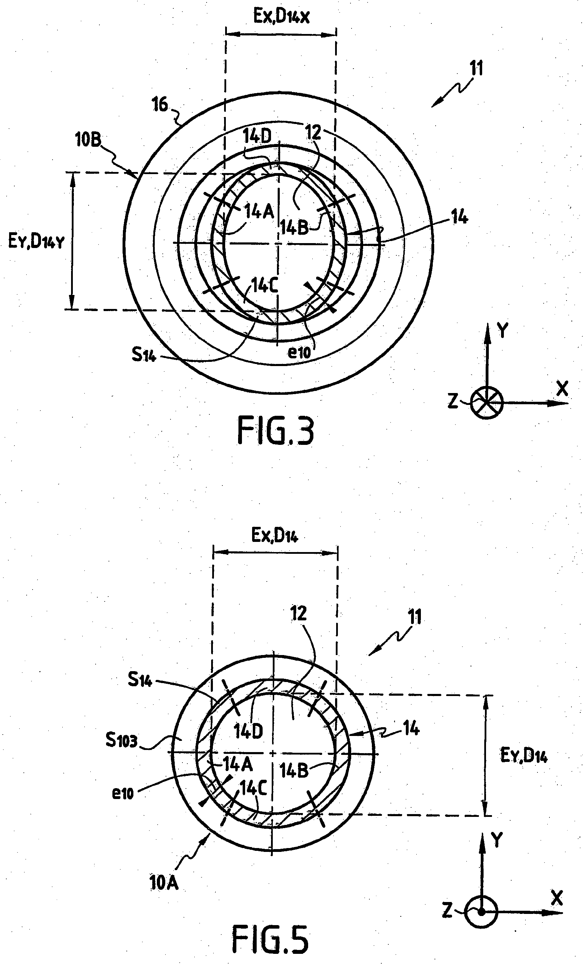

En effet, ce dernier comporte une zone d'étranglement 14 qui présente dans l'état stable du dispositif 11 une dimension réduite D_{14X} dans une première direction X. En fait, comme on le voit également sur la figure 3, la section transversale S₁₄ de la zone d'étranglement 14 est réduite dans au moins un plan transversal (X, Y) et au moins dans une direction de ce plan, en l'espèce la direction X. En l'espèce, comme illustré sur la figure 2, le long de toute la zone d'étranglement 14, la section S₁₄ présente la dimension réduite D_{14X}.

La dimension réduite D_{14X} est liée à la présence de deux portions rapprochées 14A et 14B de la paroi du logement 12 dans la zone d'étranglement 14, qui sont opposées selon la direction X. Ces deux portions rapprochées 14A et 14B présentent un écartement Ex selon la direction X dont la valeur varie selon que la zone d'étranglement 14 se trouve dans son état stable ou dans sa configuration déformée, qui en l'espèce est un état instable. En effet, à l'état stable, cet écartement Ex présente une petite dimension égale à la dimension réduite D_{14X}, tandis que dans la configuration déformée, cet écartement Ex est plus important, comme décrit plus en détails par la suite.

Le logement 12 présente en outre, dans la zone d'étranglement 14, deux portions éloignées 14C et 14D correspondant à deux portions de parois du logement qui sont opposées selon la direction Y. Ces deux portions éloignées 14C et 14D présentent un écartement E_{Y} variable selon une direction Y sensiblement perpendiculaire à la direction X, selon l'état dans lequel se trouve le dispositif. Ainsi, cet écartement E_{Y} présente, dans l'état stable, une grande dimension D_{14Y} de longueur supérieure à la dimension réduite D_{14X}, tandis que dans la configuration déformée, cet écartement E_{Y} est inférieur à D_{14Y}, comme décrit plus en détails par la suite.

Les portions rapprochées 14A et 14B et éloignées 14C et 14D sont situées de manière symétrique respectivement par rapport aux plans (Y, Z) et (X, Z). La figure 4 illustre le dispositif 11 en coupe dans un deuxième plan (Y, Z) sensiblement perpendiculaire au premier plan (X, Z).

Pour retenir le ressort hélicoïdal13 à l'intérieur du logement 12, la zone d'étranglement 14 présente de telles portions de paroi rapprochées 14A et 14B et éloignées 14C et 14D, dans au moins une de ses sections transversales S₁₄. Cependant, pour assurer un bon maintien de le ressort hélicoïdal 13 dans le logement 12, il est préférable, comme illustré sur les figures 2 et 4 que ces portions 14A à 14D soient présentes dans chaque section transversale S₁₄ de la zone d'étranglement 14, qui s'étend selon un tronçon de la longueur du corps 10 avantageusement situé dans une zone centrale 10C de ce corps 10.

En l'espèce, dans l'état stable, la zone d'étranglement 14 présente une section transversale S₁₄ en forme d'ellipse dont le petit axe correspond à la petite dimension D_{14X} et le grand axe à la grande dimension D_{14Y}.

Pour faire passer la zone d'étranglement 14 de son état stable à sa configuration déformée dans laquelle le ressort hélicoïdal 13 peut être introduit dans le logement 12 ou extrait hors de ce dernier, il est nécessaire que les deux portions rapprochées 14A et 14B puissent être écartées pour libérer un espace plus important. Pour ce faire, lesdites deux portions éloignées 14C et 14D sont aptes à être rapprochées pour écarter lesdites deux portions rapprochées 14A et 14B par déformation élastique de la zone d'étranglement 14. La configuration déformée étant un état instable, dès lors que la pression exercée sur les portions éloignées 14C et 14D est supprimée, la zone d'étranglement 14 revient à son état stable.

Pour présenter une élasticité suffisante permettant une telle déformation de la zone d'étranglement 14 entre ses états stable et instable, il est nécessaire que les parois de la zone d'étranglement 14 soient élastiques. A cette fin, le corps 10 est préférentiellement en matière plastique. Le matériau plastique peut être judicieusement choisi pour permettre des déformations élastiques répétées de la zone d'étranglement 14 permettant d'utiliser un même dispositif plusieurs fois. Il s'agit par exemple de polyoxyméthylène (POM).

En fait, comme illustré sur la figure 5 coupe transversale, une telle déformation de la zone d'étranglement 14 permet de conformer les portions de paroi 14A à 14D selon un cercle de diamètre intérieur D₁₄ dont la valeur est comprise entre D_{14X} et D_{14Y}, rendant la section S₁₄ sensiblement circulaire et le passage d'un ressort hélicoïdal 13 possible.

Lorsque le ressort hélicoïdal 13 à manipuler est sensiblement cylindrique de diamètre extérieur D₁₃ comme illustré sur les figures 2 et 4, il est préférable que le diamètre D₁₄ de la section transversale de la zone d'étranglement dans sa configuration déformée soit supérieur ou égal au diamètre D₁₃. Il s'ensuit que la dimension réduite D_{14X} doit être inférieure au diamètre D₁₃ et la grande dimension D_{14Y} doit être supérieure ou égale à ce dernier.

Ainsi, par exemple dans le cas d'un ressort hélicoïdal 13 de type ressort hélicoïdal de diamètre extérieur D₁₃ sensiblement égal à 10 mm, on choisira un dispositif 11 qui, dans son état stable, présente une zone d'étranglement 14 ayant une petite dimension D_{14X} sensiblement égale à 9 mm et une grande dimension D_{14Y} sensiblement égale à 11,5 mm et, dans sa configuration déformée, une section S₁₄ circulaire de diamètre D₁₄ sensiblement égal à 11 mm ; l'épaisseur e10 du corps 10 de ce dispositif 11 étant par exemple égale à 1 mm.

La forme extérieure du corps du dispositif pourrait par exemple être cylindrique de diamètre extérieur sensiblement égal à la grande dimension D_{14Y} majorée de l'épaisseur du corps, auquel cas la zone d'étranglement serait masquée dans l'épaisseur de la paroi du corps sans affecter sa forme extérieure.

Il peut toutefois être prévu, comme illustré sur les figures, de mettre en évidence la zone d'étranglement 14 par une variation du contour extérieur du corps 10, de manière à faciliter l'identification de la zone à déformer, en particulier lorsque la déformation est réalisée manuellement. En outre, la variation de la forme extérieure du corps 10 permet de conserver une épaisseur constante e₁₀ de ses parois sur toute leur longueur, ce qui facilite sa réalisation, en particulier pour des dispositifs en matériau plastique obtenus par moulage.

Ainsi, le corps 10 du dispositif 11 peut par exemple présenter dans sa zone centrale 10C, la zone d'étranglement 14 sur une longueur L₁₄ correspondant sensiblement au tiers de la longueur totale L₁₀ du corps 10. Par exemple pour un ressort 13 de longueur L₁₃ de longueur sensiblement égale à 55 mm, on choisira un dispositif 11 de longueur L₁₀ supérieure à la longueur du ressort, à savoir sensiblement égale à 65 mm présentant une zone d'étranglement de longueur L₁₄ sensiblement égale à 20 mm.

Une variation progressive de la forme extérieure du corps 10 peut être prévue entre la zone d'étranglement 14 et chacune des extrémités 10A et 10B pour rattraper dans le plan (X, Z) l'écart entre la petite dimension D_{14X} et la grande dimension D_{14Y}, majoré de l'épaisseur e₁₀ du corps 10.

Le corps peut ainsi être symétrique par rapport à sa zone centrale 10C ou au contraire, comme illustré sur les figures 1, 2 et 4, être dissymétrique par rapport à la zone centrale 10C. En fait, le corps 10 représenté sur les figures 1, 2 et 4 présente à son extrémité 10B une collerette 16 et on distingue, entre ses extrémités 10A et 10B, cinq zones de sa paroi dont le contour extérieur est particulier. L'introduction d'un ressort hélicoïdal dans le corps 10 du dispositif 11 illustré se fera préférentiellement par l'extrémité 10B, tandis que l'extraction d'un ressort hélicoïdal se fera plutôt par l'extrémité 10A, comme décrit en détails par la suite.

Une première zone correspond à la zone d'étranglement 14 et forme la zone centrale 10C précédemment évoquée. Cette première zone 14 présente donc, en section transversale et en état stable, un contour en forme d'ellipse tel que précédemment décrit.

Une deuxième zone 10₂ s'étend à partir de cette zone d'étranglement 14 centrale vers l'extrémité 10A. Une troisième zone 10₃ s'étend à partir de cette deuxième zone 10₂ intermédiaire jusqu'à l'extrémité 10A. Comme le montre la figure 5, dans cette troisième zone 10₃ le corps 10 présente une section transversale S₁₀₃ sensiblement circulaire, de diamètre D₁₀₃ constant le long de l'axe Z et sensiblement égal (à l'épaisseur e₁₀ près) à la grande dimension D_{14Y}. La deuxième zone 10₂ est une zone intermédiaire qui permet de rattraper progressivement la différence entre le contour extérieur elliptique de la zone d'étranglement 14 et celui, circulaire, de cette troisième zone 10₃.

De l'autre côté, une quatrième zone 10₄ s'étend à partir de la zone d'étranglement centrale 10C, vers l'extrémité 10A présentant la collerette 16. Une cinquième zone 10₅ s'étend à partir de cette quatrième zone 10₄ intermédiaire jusqu'à l'extrémité 10A. Le contour extérieur de cette cinquième zone 10₅ est évasé dans le sens allant vers l'extrémité 10A. Cette cinquième zone 10₅ présente une section transversale sensiblement circulaire, de diamètre D₁₀₅ qui diminue le long de l'axe Z lorsqu'on se rapproche de la zone d'étranglement 14, jusqu'à atteindre une valeur égale (à l'épaisseur e₁₀ près) à la petite dimension D_{14X}. La quatrième zone 10₄ est une zone intermédiaire qui permet de rattraper le contour extérieur de la zone d'étranglement 14 elliptique vers cette cinquième zone 10₅ de section circulaire, comme illustré sur les figures 2 et 4.

Entre sa zone d'étranglement 14 et sa ou ses extrémité(s) ouverte(s), le logement présente avantageusement une portion qui s'évase vers l'extrémité concernée pour faciliter l'introduction d'un ressort hélicoïdal 13 dans le logement 12. En l'espèce, il s'agit de la cinquième zone 10₅ précédemment évoquée.

Le dispositif peut être utilisé pour le maintien et le stockage d'un ressort hélicoïdal. L'insertion et l'extraction s'effectuent de la même manière en sollicitant la zone d'étranglement par déformation. En fait, il suffit de compresser le contour de la zone d'étranglement 14 selon au moins la deuxième direction Y (voir figure 3) pour écarter les deux portions rapprochées 14A et 14B en rapprochant les deux portions éloignées 14C et 14D l'une de l'autre. Cette opération peut être effectuée manuellement ou de manière automatisée à l'aide d'une installation telle que décrite ci-après.

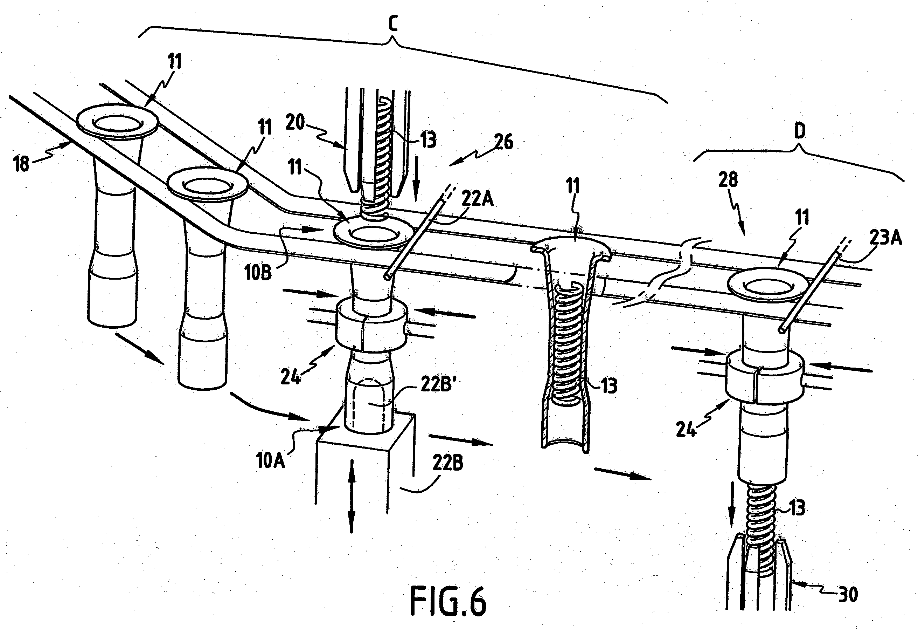

La figure 6 représente de manière schématique une installation selon l'invention. Cette installation comporte des premiers moyens d'amenée 18 d'une pluralité de dispositifs 11 et des deuxièmes moyens d'amenée 20 d'une pluralité de ressorts hélicoïdaux 13. En l'espèce, les premiers moyens d'amenée 18 de type connu peuvent par exemple comporter un goulet 18 préférentiellement incliné apte à coopérer avec les dispositifs 11 en les supportant par leur collerette 16. Les dispositifs 11, entraînés préférentiellement dans leur état stable par gravitation le long du goulet 18, sont amenés progressivement en regard des deuxièmes moyens d'amenée 20. Lorsque le goulet n'est pas incliné, un tapis de type convoyeur peut être prévu pour déplacer les dispositifs.

L'installation comporte en outre des moyens de maintien d'un dispositif 11, de manière que l'extrémité 10B de ce dernier se trouve bien en regard des deuxièmes moyens d'amenée 20. Les moyens de maintien peuvent par exemple comporter un système 22A de blocage en position de la collerette du dispositif 11, ce système 22A pouvant être formé par une butée mobile apte à être placée en travers du goulet 18 ou à en être éloignée. Dès lors qu'un dispositif 11 se trouve dans cette position, sa zone d'étranglement 14 peut être déformée à l'aide de moyens de sollicitation 24 aptes à solliciter le dispositif 11. Ces moyens de sollicitation 24 comportent par exemple deux portions de bague semi-circulaires qui sont aptes à se resserrer autour du contour extérieur du dispositif 11 dans sa zone d'étranglement 14 pour exercer une pression sur les parois éloignées 14C et 14D visant à écarter les parois rapprochées 14A et 14B.

L'installation peut comporter des moyens de chargement de ressorts hélicoïdaux 26 permettant l'introduction d'un ressort hélicoïdal, par exemple un ressort hélicoïdal 13 dans un dispositif 11. En l'espèce, les moyens de chargement 26 comportent les premiers 18 et deuxièmes 20 moyens d'amenée, les moyens de maintien du dispositif et les moyens de sollicitation 24 précités. Lorsque le dispositif comporte deux extrémités 10A et 10B ouvertes, telles que précitées, il est préférable que les moyens de maintien comportent en outre des moyens d'obturation momentanée de l'extrémité 10A du corps 10 opposée à celle destinée à l'introduction de le ressort hélicoïdal et qui permet d'éviter la chute non désirée du ressort hélicoïdal au moment de son introduction dans le logement 12 dont la zone d'étranglement 14 est alors écartée.

Ces moyens d'obturation peuvent être formés par une pièce 22B mobile en va-et-vient. Comme indiqué sur la figure 6, cette pièce 22B comporte avantageusement une tête de centrage 22B' apte à s'insérer dans le corps par l'extrémité 10A pour centrer le ressort 13, au moins en longueur.

Dès que le ressort 13 est mis en place, les moyens de sollicitation 24 sont désactivés pour libérer la pression exercée sur la zone d'étranglement 14 et le dispositif 11 retrouve son état stable ; il s'ensuit que le ressort 13 est maintenu dans le logement 12 du dispositif par l'intermédiaire des portions rapprochées 14A et 14B. Les dispositifs contenant chacun un ressort, peuvent alors être stockés et manipulés aisément.

Pour permettre une mise en place automatique d'un ressort dans un ensemble dans lequel il est destiné à être intégré, l'installation peut comporter des moyens de déchargement de ressorts hélicoïdaux 28 permettant l'extraction du ressort hélicoïdal 13 hors du dispositif 11. En l'espèce, les moyens de déchargement 28 comportent les moyens de maintien du dispositif 11, par exemple, un système 23A analogue au système de blocage en position 22A et les moyens de sollicitation 24 précités.

Lorsque cela est possible, l'ensemble dans lequel le ressort va être intégré peut être positionné directement en regard de l'extrémité 10A pour une mise en place directe du ressort 13. Dans le cas contraire, les moyens de déchargement 28 peuvent en outre comporter des moyens d'évacuation 30 de type connu, par exemple une goulotte 30.

Ainsi, dès lors que le dispositif 11 est déformé par les moyens de sollicitation 24 pour atteindre son état instable, le ressort 13 n'est plus maintenu dans le logement 12 du dispositif et peut être récupéré pour sa mise en place dans un ensemble dans lequel il est destiné à intégrer.

La partie chargement C de l'installation se trouve par exemple sur le site de fabrication des pièces 13. Ces pièces 13, disposées chacune dans des dispositifs 11, peuvent alors être transportées jusqu'à un site de montage sur lequel se trouve la partie déchargement D de l'installation.

## Revendications

1. Dispositif de manipulation d'un ressort hélicoïdal (13), le dispositif comprenant un corps (10) comportant un logement intérieur (12) apte à contenir ledit ressort hélicoïdal (13), ledit logement (12) présentant au moins une extrémité ouverte (10A, 10B) et une zone d'étranglement (14) apte dans un état stable, dans lequel ladite zone d'étranglement (14) présente une dimension réduite (D_{10X}) qui est réduite dans une première direction (X) par rapport à un diamètre intérieur (D₁₄) de ladite zone d'étranglement, à retenir ledit ressort hélicoïdal (13) à l'intérieur du corps (10) et à être déformée pour adopter une configuration déformée permettant l'introduction dudit ressort hélicoïdal (13) dans le logement (12) ou l'extraction dudit ressort hélicoïdal (13) hors du logement (12), ladite zone d'étranglement (14) présentant dans sa configuration déformée une section transversale (S₁₄) sensiblement circulaire définissant le diamètre intérieur (D₁₄) et présentant dans son état stable deux portions rapprochées (14A, 14B) selon une petite dimension (D_{14X}) et deux portions éloignées (14C, 14D) selon une grande dimension (D_{14Y}) définissant une forme elliptique, lesdites deux portions éloignées (14C, 14D) étant aptes à être rapprochées pour écarter lesdites deux portions rapprochées (14A, 14B).

2. Dispositif selon la revendication précédente, dans lequel, dans sa configuration déformée, la zone d'étranglement (14) est dans un état instable.

3. Dispositif selon la revendication 1 ou 2, dans lequel ledit corps (10) a sensiblement une forme allongée et tubulaire.

4. Dispositif selon l'une quelconque des revendications précédentes, dans lequel ledit corps (10) comporte deux extrémités ouvertes (10A, 10B).

5. Dispositif selon l'une quelconque des revendications précédentes, dans lequel ledit corps (10) comporte une collerette (16) au voisinage d'au moins une extrémité ouverte (10A, 10B) dudit corps.

6. Dispositif selon l'une quelconque des revendications 1 à 5, **caractérisé en ce que** la zone d'étranglement (14) s'étend dans une zone centrale du corps (10), celui-ci présentant, de part et d'autre de cette zone centrale, deux zones (10₃, 10₅) de section transversale sensiblement circulaire.

7. Installation de manipulation d'un ressort hélicoïdal (13), comportant un dispositif de manipulation (11) selon l'une quelconque des revendications précédentes, des moyens de maintien (22A, 22B, 22B'; 23A) de ce dispositif de manipulation (11) et des moyens de sollicitation (24) aptes à solliciter ledit dispositif (11) pour déformer ladite zone d'étranglement (14).

8. Installation selon la revendication 7, comportant en outre des premiers moyens d'amenée (18) d'une pluralité de dispositifs (11) et des deuxièmes moyens d'amenée (20) d'une pluralité de ressorts hélicoïdaux (13).

9. Installation selon la revendication 7 ou 8, dans laquelle lesdits premiers moyens d'amenée (18) comportent un goulet (18) apte à coopérer avec ledit ressort hélicoïdal (13).

10. Installation selon l'une quelconque des revendications 7 à 9, comportant des moyens de chargement de ressorts hélicoïdaux (26) permettant l'introduction d'un ressort hélicoïdal (13) dans un dispositif (11).

11. Installation selon l'une quelconque des revendications 7 à 10, comportant des moyens de déchargement de ressorts hélicoïdaux (28) permettant l'extraction d'un ressort hélicoïdal (13) hors du dispositif (11) dans lequel ledit ressort hélicoïdal (13) est logé.

12. Procédé pour manipuler un ressort hélicoïdal (13), dans lequel les étapes suivantes sont réalisées :
- on fournit un dispositif de manipulation (11) ayant un corps (10) comportant un logement intérieur (12) apte à contenir ledit ressort hélicoïdal (13), ledit logement (12) présentant au moins une extrémité ouverte (10A, 10B) et une zone d'étranglement (14) apte dans un état stable, dans lequel ladite zone d'étranglement (14) présente une dimension réduite (D_{14X}) qui est réduite dans une première direction (X) par rapport à un diamètre intérieur (D₁₄) de ladite zone d'étranglement, à retenir ledit ressort hélicoïdal (13) à l'intérieur du corps (10) et à être déformée pour adopter une configuration déformée permettant l'introduction dudit ressort hélicoïdal (13) dans le logement (12) ou l'extraction dudit ressort hélicoïdal (13) hors du logement (12),
- on déforme la zone d'étranglement (14) pour qu'elle adopte sa configuration déformée présentant une section transversale (S₁₄) sensiblement circulaire,
- on introduit le ressort hélicoïdal (13) dans le corps (10) alors que la zone d'étranglement (14) est dans sa configuration déformée,
- on provoque le retour de la zone d'étranglement (14) dans son état stable dans lequel le ressort hélicoïdal (13) est maintenu dans le corps (10) et dans laquelle la zone d'étranglement a une section transversale sensiblement elliptique.

13. Procédé selon la revendication précédente, dans lequel, pour extraire le ressort hélicoïdal (13) hors du dispositif (11), on déforme la zone d'étranglement (14) pour qu'elle adopte sa configuration déformée.

14. Procédé selon la revendication 12 ou 13, dans lequel, dans sa configuration déformée, la zone d'étranglement (14) est dans un état instable.

15. Procédé selon l'une quelconque des revendications 12 à 14, dans lequel on fournit un dispositif de manipulation dont le corps (10) présente deux zones (10₃, 10₅) de section transversale sensiblement circulaire de part et d'autre de la zone d'étranglement (14).

## Patentansprüche

1. Vorrichtung zur Betätigung einer Spiralfeder (13), wobei die Vorrichtung einen Körper (10) besitzt, umfassend eine innere Aufnahme (12), die geeignet ist, die Spiralfeder (13) zu enthalten, wobei die Aufnahme (12) mindestens ein offenes Ende (10A, 10B) und eine verengte Zone (14) aufweist, die in einem stabilen Zustand, in der die verengte Zone (14) eine verringerte Dimension (D_{14X}) aufweist, die in eine erste Richtung (X) in Bezug zu einem Innendurchmesser (D₁₄) der verengten Zone verringert ist, geeignet ist, die Spiralfeder (13) im Inneren des Körpers (10) zu halten und verformt zu werden, um eine verformte Ausführung anzunehmen, die die Einführung der Spiralfeder (13) in die Aufnahme (12) oder die Entnahme der Spiralfeder (13) aus der Aufnahme (12) ermöglicht, wobei die verengte Zone (14) in ihrer verformten Ausführung einen im Wesentlichen kreisförmigen Querschnitt (S₁₄) aufweist, der den Innendurchmesser (D₁₄) definiert, und in ihrem stabilen Zustand zwei nach einer kleinen Dimension (D_{14X}) angenäherte Abschnitte (14A, 14B) und zwei nach einer großen Dimension (D_{14Y}) entfernte Abschnitte (14C, 14D), die eine elliptische Form definieren, aufweist, wobei die entfernten Abschnitte (14C, 14D) geeignet sind, einander angenähert zu werden, um die beiden angenäherten Abschnitte (14A, 14B) zu entfernen.

2. Vorrichtung nach dem vorhergehenden Anspruch, bei der die verengte Zone (14) in ihrer verformten Ausführung in einem instabilen Zustand ist.

3. Vorrichtung nach Anspruch 1 oder 2, bei der der Körper (10) im Wesentlichen eine längliche und röhrenförmige Form aufweist.

4. Vorrichtung nach einem der vorhergehenden Ansprüche, bei der der Körper (10) zwei offene Enden (10A, 10B) umfasst.

5. Vorrichtung nach einem der vorhergehenden Ansprüche, bei der der Körper (10) einen Kragen (16) in der Nähe mindestens eines offenen Ende (10A, 10B) des Körpers umfasst.

6. Vorrichtung nach einem der Ansprüche 1 bis 5, **dadurch gekennzeichnet, dass** sich die verengte Zone (14) in einer zentralen Zone des Körpers (10) erstreckt, wobei dieser beiderseits dieser zentralen Zone zwei Zonen (10₃, 10₅) mit einem im Wesentlichen kreisförmigen Querschnitt aufweist.

7. Anlage zur Betätigung einer Spiralfeder (13), umfassend eine Betätigungsvorrichtung (11) nach einem der vorhergehenden Ansprüche, Haltemittel (22A, 22B, 22B'; 23A) dieser Betätigungsvorrichtung (11) und Steuermittel (24), die geeignet sind, die Vorrichtung (11) zu steuern, um die verengte Zone (14) zu verformen.

8. Anlage nach Anspruch 7, ferner umfassend erste Zuführmittel (18) einer Vielzahl von Vorrichtungen (11) und zweite Zuführmittel (20) einer Vielzahl von Spiralfedern (13).

9. Anlage nach Anspruch 7 oder 8, bei der die ersten Zuführmittel (18) eine Verengung (18) umfassen, die geeignet ist, mit der Spiralfeder (13) zusammenzuwirken.

10. Anlage nach einem der Ansprüche 7 bis 9, umfassend Aufgabemittel von Spiralfedern (26), die die Einführung einer Spiralfeder (13) in eine Vorrichtung (11) ermöglichen.

11. Anlage nach einem der Ansprüche 7 bis 10, umfassend Entnahmemittel von Spiralfedern (28), die die Entnahme einer Spiralfeder (13) aus der Vorrichtung (11), in der die Spiralfeder (13) angeordnet ist, ermöglichen.

12. Verfahren zur Betätigung einer Spiralfeder (12), bei dem die folgenden Schritte durchgeführt werden:
- Bereitstellen einer Betätigungsvorrichtung (11), die einen Körper (10) besitzt, umfassend eine innere Aufnahme (12), die geeignet ist, die Spiralfeder (13) zu enthalten, wobei die Aufnahme (12) mindestens ein offenes Ende (10A, 10B) und eine verengte Zone (14) aufweist, die in einem stabilen Zustand, in der die verengte Zone (14) eine verringerte Dimension (D_{14X}) aufweist, die in eine erste Richtung (X) in Bezug zu einem Innendurchmesser (D₁₄) der verengten Zone verringert ist, geeignet ist, die Spiralfeder (13) im Inneren des Körpers (10) zu halten und verformt zu werden, um eine verformte Ausführung anzunehmen, die die Einführung der Spiralfeder (13) in die Aufnahme (12) oder die Entnahme der Spiralfeder (13) aus der Aufnahme (12) ermöglicht,
- Verformen der verengten Zone (14), damit sie ihre verformte Ausführung annimmt, die einen im Wesentlichen kreisförmigen Querschnitt (S₁₄) aufweist,
- Einführen der Spiralfeder (13) in den Körper (10), während sich die verengte Zone (14) in ihrer verformten Ausführung befindet,
- Bewirken der Rückkehr der verengten Zone (14) in ihren stabilen Zustand, in dem die Spiralfeder (13) in dem Körper (10) gehalten wird, und in dem die verengte Zone einen im Wesentlichen elliptischen Querschnitt hat.

13. Verfahren nach dem vorhergehenden Anspruch, bei dem für die Entnahme der Spiralfeder (13) aus der Vorrichtung (11) die verengte Zone (14) verformt wird, damit sie ihre verformte Ausführung annimmt.

14. Verfahren nach Anspruch 12 oder 13, bei dem die verengte Zone (14) in ihrer verformten Ausführung in einem instabilen Zustand ist.

15. Verfahren nach einem der Ansprüche 12 bis 14, bei dem eine Betätigungsvorrichtung bereitgestellt wird, deren Körper (10) zwei Zonen (10₃, 10₅) mit einem im Wesentlichen kreisförmigen Querschnitt beiderseits der verengten Zone (14) aufweist.

## Claims

1. A device for handling a coil spring (13), the device comprising a body (10) having an internal housing (12) suitable for containing said coil spring (13), said housing (12) presenting at least one open end (10A, 10B) and a constriction zone (14) that is suitable, in a stable state in which said constriction zone (14) presents a reduced dimension (D_{14X}) that is reduced in a first direction (X) with respect to an inner diameter (D14) of said constriction zone, for retaining said coil spring (13) inside the body (10), and for being deformed to adopt a deformed configuration enabling said coil spring (13) to be inserted into the housing (12) or enabling said coil spring (13) to be extracted from the housing (12), wherein said constriction zone (14) in its deformed configuration presents a cross-section (S₁₄) that is substantially circular and that defines the inner diameter (D14), and the constriction zone (14) in its stable state presents two closer-together portions (14A, 14B) along a short dimension (D_{14X}) and two farther-apart portions (14C, 14D) along a long dimension (D_{14Y}) so as to defined an elliptical shape, said two farther-apart portions (14C, 14D) being suitable for being moved towards each other in order to move said two closer-together portions (14A, 14B) apart from each other.

2. A device according to the preceding claim, wherein the constriction zone (14) in its deformed configuration is in a state that is unstable.

3. A device according to claim 1 or claim 2, wherein said body (10) is substantially elongate and tubular in shape.

4. A device according to any preceding claim, wherein said body (10) has two open ends (10A, 10B).

5. A device according to any one preceding claim, wherein said body (10) includes a collar (16) close to at least one open end (10A, 10B) of said body.

6. A device according to any of claims 1 to 5, wherein the constriction zone (14) extends in a central region of the body (10), said body presenting, on respective sides of that central region, two zones (10₃, 10₅) having a substantially circular cross-section.

7. An installation for handling a helical spring (13), comprising a handling device (11) according to any preceding claim, holder means (22A, 22B, 22B'; 23A) for holding such handling device (11), and force-application means (24) suitable for acting on said device (11) to deform said constriction zone (14).

8. An installation according to claim 7, further comprises first feeder means (18) for feeding a plurality of devices (11) and second feeder means (20) for feeding a plurality of coil springs (13).

9. An installation according to claim 7 or claim 8, wherein said first feeder means (18) comprise a chute (18) suitable for co-operating with said coil spring (13).

10. An installation according to any one of claims 7 to 9, including coil springs loader means (26) suitable for inserting a coil spring (13) into a device (11).

11. An installation according to any one of claims 7 to 10, including coil springs unloader means (28) enabling a coil spring (13) to be extracted from the device (11) in which said coil spring (13) is housed.

12. A method of handling a coil spring (13) in which the following steps are performed:
• providing a handling device (11) having a body (10) with an internal housing (12) suitable for containing said coil spring (13), said housing (12) presenting at least one open end (10A, 10B) and a constriction zone (14) suitable, in a stable state in which said constriction zone (14) presents a reduced dimension (D_{14X}) that is reduced in a first direction (X) with respect to an inner diameter (D₁₄) of said constriction zone, for retaining said coil spring (13) inside the body (10), and for being deformed to adopt a deformed configuration enabling said coil spring (13) to be introduced into the housing (12) or enabling said coil spring (13) to be extracted from the housing (12);
• deforming the constriction zone (14) so that it adopts its deformed configuration with substantially circular cross-section (S14);
• inserting the coil spring (13) into the body (10) while the constriction zone (14) is in its deformed configuration; and
• causing the constriction zone (14) to return to its stable state in which the coil spring (13) is held inside the body (10) and in which the constriction zone has a substantially elliptical cross-section.

13. A method according to the preceding claim, wherein in order to extract the coil spring (13) from the device (11), the constriction zone (14) is deformed so that it adopts its deformed configuration.

14. A method according to claim 12 or claim 13, wherein the constriction zone (14) in its deformed configuration is in a state that is unstable.

15. A method according to any one of claims 12 to 14, wherein a handling device (11) is provided of which the body (10) presents two zones (10₃, 10₅) having a substantially circular cross-section, said zones being located on respective sides of the constriction zone (14).
